# FASCICULE DE BREVET EUROPEEN

(11) **EP 0 294 255 B1**
(45) Date de publication et mention de la délivrance du brevet: **27.01.1993**
(21) Numéro de dépôt: 88401100.8
(22) Date de dépôt: 05.05.1988
(51) Int. Cl.: G01N 29/04

(54) **Procédé automatique d'identification de défauts par ultrasons, et système correspondant**
Verfahren zur automatischen Fehleridentifizierung mittels Ultraschall und entsprechende Einrichtung
Method for automatic fault identification by means of ultrasound, and apparatus therefor

(30) Priorité: 12.05.1987 FR 8706658
(43) Date de publication de la demande: 07.12.1988
(73) Titulaire: COMMISSARIAT A L'ENERGIE ATOMIQUE, 75015 Paris Cédex 15 (FR)
(72) Inventeur: Miglianico, Thierry, F-91240 Saint-Michel-sur Orge (FR); Mougel, Jean-François, F-91470 Limours (FR); Papezyck, François, F-91470 Limours (FR); Wident, Pierre, F-91600 Savigny sur Orge (FR)
(74) Mandataire: Mongrédien, André

(56) Documents cités:
- FR-A- 2 361 649
- US-A- 3 857 052
- US-A- 4 312 229
- US-A- 4 518 992

## Description

La présente invention a pour objet un procédé automatique d'identification de défauts par ultrasons. Elle a également pour objet un dispositif correspondant.

L'invention concerne le domaine du contrôle non destructif, et plus particulièrement le contrôle par ultrasons de la qualité des matériaux et notamment des soudures. Ce contrôle est primordial, du point de vue de la sécurité, dans de nombreux domaines techniques tel que celui des machines à pression (chaudières à vapeur, appareil de pétrochimie, ...) ou celui des matériels de supportage (grue, téléphérique, avions, ...).

On connaît plusieurs procédés d'identification de défauts de soudure par ultrasons, mais chacun de ces procédés requiert un opérateur humain.

Dans un système connu, un opérateur humain est guidé pour déplacer un palpeur, comprenant un émetteur ultrasonore et un récepteur ultrasonore, à proximité de la soudure analysée. Les défauts sont identifiés en fonction de l'affaiblissement de l'écho ultrasonore reçu par le récepteur lorsque le palpeur se déplace.

Dans ce système, l'opérateur dispose d'une certaine latitude dans le choix du déplacement du palpeur, dans le choix du palpeur lui-même et il analyse lui-même la forme de l'écho ultrasonore. A la fin d'une étape de déplacement du palpeur, l'opérateur communique au système des données telles que la forme de l'écho ultrasonore, les différences de réflectivités obtenues selon différentes orientations et autre. Le système diagnostique alors d'éventuels défauts en fonction des données reçues.

On constate donc que le système ne peut fonctionner qu'avec le concours d'un opérateur humain, et que ce dernier doit être techniquement compétent afin d'être capable de délivrer des données correctes au système.

On connaît également un procédé d'identification de défauts de soudure consistant, dans une première étape, à balayer une soudure par un palpeur pour produire une image ultrasonore ; cette image est un relevé point par point de l'amplitude du signal ultrasonore réfléchi par la soudure ; dans une seconde étape, on demande à un spécialiste d'interprêter cette image ultrasonore pour identifier les défauts de soudure.

Pour faciliter la tâche du spécialiste, l'image ultrasonore peut être présentée sous la forme d'une cartographie en fausses couleurs. Chaque couleur correspond à une gamme d'amplitude particulière fixée à priori et n'a aucune relation directe avec les défauts à identifier.

Ce procédé ne peut être mis en oeuvre que par un spécialiste.

Dans les méthodes connues d'identification de défauts de soudure, il est nécessaire de recourir au jugement d'un opérateur humain soit pour délivrer des données à un système de traitement automatique, soit pour identifier les défauts. Ceci n'est pas pleinement satifaisant car la qualité de l'analyse de l'opérateur humain peut varier dans le temps, par exemple en fonction de conditions externes (fatigue ou autre) et car, de plus, le nombre de contrôles qui peuvent être faits est limité en raison du faible nombre de spécialistes compétents.

L'invention a donc pour but de permettre une identification automatique de défauts, notamment dans une soudure. Ceci présente les avantages d'une qualité d'analyse constante et de la possibilité de contrôler rapidement un grand nombre de pièces.

Le procédé de l'invention consiste à produire, de manière connue, une image ultrasonore de la pièce puis, de manière caractéristique, à analyser automatiquement cette image ultrasonore pour identifier les défauts présents dans la pièce.

De manière précise, l'invention a pour objet un procédé automatique d'identification de défauts par ultrasons pour identifier un défaut de type déterminé dans une pièce, ledit procédé comprenant une première étape pour produire une image ultrasonore de ladite pièce dans laquelle :
- on balaie ladite pièce par au moins un faisceau d'ondes ultrasonores,
- on enregistre point par point l'amplitude des signaux ultrasonores réfléchis ou diffractés,
- on construit une image ultrasonore dont l'amplitude du signal en chaque point est proportionnelle audit enregistrement,
ledit procédé étant caractérisé en ce qu'il comprend une seconde étape visant à reconnaître la présence dudit défaut en analysant ladite image ultrasonore, dans laquelle :
- on filtre ladite image ultrasonore pour éliminer les signaux dont l'amplitude est inférieure à un seuil déterminé au cours d'une phase d'apprentissage sur des pièces présentant ledit défaut, ledit seuil étant fonction du type dudit défaut, ce filtrage produisant des zones disjointes correspondant aux réflecteurs ultrasonores,
- on crée des objets en extrayant les contours desdites zones disjointes,
- on établit une liste des objets de ladite image filtrée, chaque objet étant ainsi défini géométriquement par son contour,
- pour chaque objet, on calcule les valeurs des attributs d'une liste prédéterminée d'attributs, spécifiques du type de défaut recherché, caractérisant un objet,
- pour chaque objet, on compare les valeurs desdits attributs à des valeurs minimale et/ou maximale, fonction du type dudit défaut, déterminées au cours de ladite phase d'apprentissage, sur des pièces témoins dans lesquelles lesdits défauts sont présents et identifiés par un spécialiste,
- on identifie les défauts en fonction du résultat de cette comparaison.

Le procédé peut être appliqué à la détection d'un seul type de défaut ou à la détection de plusieurs types de défauts différents. Dans ce dernier cas, les différents types de défauts sont recherchés simultanément, en appliquant des seuils différents à l'image ultrasonore.

Les propriétés des objets sont définies par les valeurs des attributs desdits objets. Ces attributs peuvent être de nature géométrique (position dans l'image, dimension) ou de nature physique (lié aux amplitudes des points d'image constituant l'objet).

L'invention a également pour objet un système automatique d'identification de défauts par ultrasons. Ce système comprend un premier ensemble de moyens pour produire, de manière classique, une image ultrasonore et un deuxième ensemble de moyen ou moyen d'analyse, pour identifier des défauts en analysant, selon le procédé de l'invention, ladite image ultrasonore.

De manière avantageuse, le moyen d'analyse comprend un moyen de filtrage commandable pour appliquer un seuil à l'image ultrasonore, un moyen de traitement d'image pour rechercher les objets contenus dans l'image seuillée, et un moyen de reconnaissance, sous la forme d'un système expert, composé de la liste desdits objets, constituant la base de faits du système expert, de la liste des propriétés des objets caractéristiques de chaque type de défaut, cette liste constituant la base de connaissances du système expert, et d'un moyen de traitement pour interpréter les objets de la base de faits en fonction de la base de connaissances.

On constate que la première opération, qui conduit à mettre en évidence des objets artificiels, n'ayant pas de rapport a priori avec la présence d'un défaut, n'a pas d'équivalent dans les procédés connus.

La justification du procédé de l'invention repose sur la constatation faite expérimentalement que, de façon surprenante, il est possible d'associer à chaque type de défaut, au moins une valeur de seuil déterminée pour le filtrage de l'image ultrasonore et que, dans l'image filtrée et traitée, la présence de défauts dudit type de défaut se caractérise par des objets ayant des propriétés, notamment des propriétés géométriques, particulières.

Les caractéristiques et avantages de l'invention ressortiront mieux de la description qui va suivre, donnée à titre illustratif mais non limitatif, en référence aux dessins annxés, sur lesquels :
- la figure 1 est un organigramme du procédé de l'invention,
- la figure 2 illustre schématiquement un mode de réalisation d'n système pour la mise en oeuvre du procédé de l'invention,
- la figure 3 illustre le principe de la mesure par ultrasons,
- la figure 4 représente schématiquement un mode de réalisation du moyen d'analyse du système selon l'invention,
- la figure 5 est une vue en coupe d'une extrémité de crayon combustible, comprenant une soudure pour fixer un bouchon à une gaine,
- la figure 6 représente une image ultrasonore seuillée comportant un objet caractéristique d'une porosité de la soudure,
- la figure 7 représente une image ultrasonore seuillée comportant un objet caractéristique d'un manque de pénétration de la soudure, et
- la figure 8 représente une image ultrasonore seuillée comportant un objet caractéristique d'un affaissement interne de gaine.

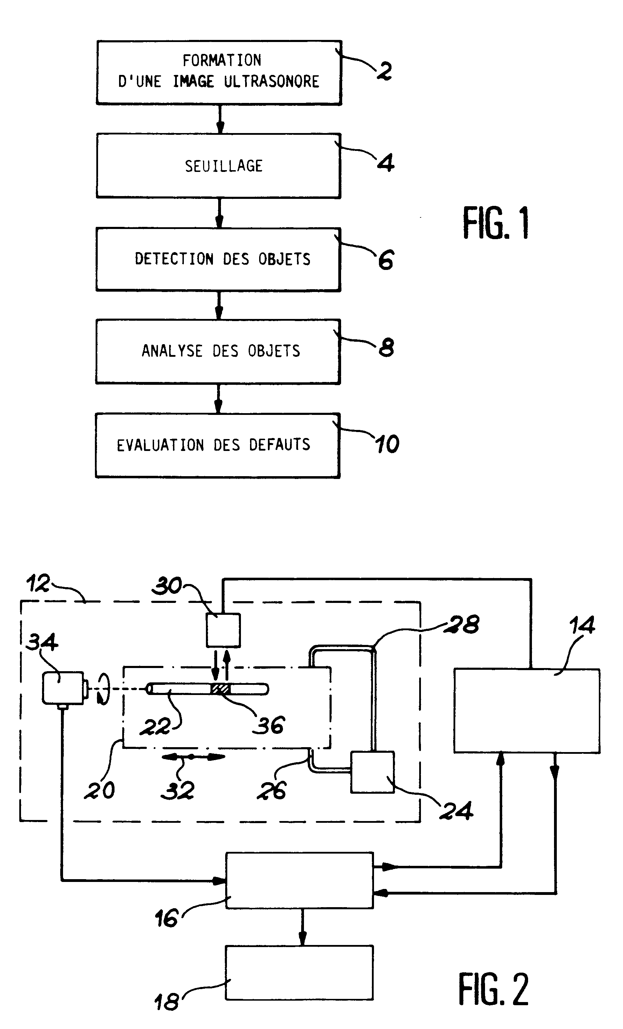

Le procédé de l'invention est constitué d'une suite d'opérations qui sont indiquées dans l'organigramme de la figure 1.

L'opération initiale 2 concerne la formation d'une image ultrasonore. L'obtention d'une telle image est classique. Elle consiste à émettre vers la soudure à analyser au moins un faisceau d'ondes ultrasonores et à enregistrer l'amplitude des ondes ultrasonores réfléchies ou diffractées. Par déplacement des faisceaux d'ondes ultrasonores par rapport à la soudure, on relève l'amplitude des ondes ultrasonores réfléchies ou diffractées en un grand nombre de points. On constitue ainsi une image ultrasonore.

Cette image ultrasonore peut être uni-, bi- ou tridimensionnelle.

Une image unidimensionnelle correspond au cas où l'émetteur d'ondes ultrasonores ne possède qu'une seul degré de liberté.

Une image ultrasonore bidimensionnelle peut être obtenue de deux manières. Elle peut résulter d'un déplacement de l'émetteur suivant deux directions non parallèles ; l'image ultrasonore représente alors une projection de la soudure dans le plan défni par ces deux directions. Une image ultrasonore bidimensionnelle peut aussi résulter d'un émetteur se déplaçant suivant une direction unique, l'autre dimension étant donnée par la mesure de la profondeur à laquelle l'onde ultrasonore a été réfléchie dans la soudure. Cette profondeur se détermine par le temps s'écoulant entre l'émission d'une onde ultrasonore et la réception de l'onde réfléchie ou diffractée correspondante.

Enfin, une image tridimensionnelle peut étre obtenue en combinant le déplacement de l'émetteur suivant deux directions non parallèles, définissant ainsi un plan, et une mesure de la profondeur à laquelle l'onde ultrasonore est réfléchie, selon la direction perpendiculaire audit plan.

L'utilisation d'une image tridimensionnelle est intéressante dans le cas de pièces épaisses (> 1cm), telles que les pièces en composite utilisées en aéronautique. En effet, il faut savoir localiser dans ce cas un défaut en profondeur, avec précision et définir son volume.

Comme on l'a représenté sur la figure 1, l'opération 2 de formation d'une image ultrasonore est suivie d'une opération 4 de seuillage de cette image.

L'image ultrasonore est filtrée par un seuil dont le niveau, conformément à l'invention, est caractéristique du type de défaut de soudure recherché. Cette opération a pour effet de remplacer les amplitudes inférieures au seuil par des amplitudes nulles.

L'image filtrée comporte alors des zones où les points d'image ont des amplitudes nulles et des zones où les points d'image ont une amplitude supérieure au seuil.

L'opération 6 concerne la détection automatique des zones où les points d'image ont une amplitude supérieure au seuil. Ces zones sont appelés "objet" dans le cadre du procédé de l'invention. La localisation de ces objets est faite par des techniques dites d'extraction de contour, qui sont tout à fait classiques dans le domaine du traitement d'image par ordinateur.

L'opération 6 consiste non seulementà localiser les objets dans l'image ultrasonore filtrée, mais également à caractériser ces objets, c'est-à-dire à en déterminer les propriétés.

Cette caractérisation prend la forme d'un ensemble de valeurs affectées à des attributs. Ceux-ci comprennent des attributs de nature géométrique et des attributs de nature physique :
Sans être limitatif, on peut citer, pour les attributs de nature géométrique :
- la position de l'objet dans l'image,
- la dimension de l'objet et pour les attributs de nature physique :
- la masse de l'objet, c'est-à-dire la somme des amplitudes des points d'image constituant l'objet,
- la densité de l'objet, c'est-à-dire le rapport de sa masse à sa surface,
- la position du centre de gravité correspondant de l'objet,
- l'amplitude maximale,
- la position du signal d'amplitude maximale.

Lorsque les objets contenus dans l'image ultrasonore filtrée sont localisés et caractérisés, c'est-à-dire qu'ils sont individualisés par la détermination de la suite des valeurs de leurs attributs, on procède, conformément à l'organigramme de la figure 1, à une analyse de ces objets pour identifier les défauts du type recherché.

Cette opération d'analyse 8 est une opération d'identification des objets suivant un processus de raisonnement utilisant les limites opérationnelles prédéterminées de ces attributs. Un objet est reconnu comme représentatif d'un défaut si l'ensemble de ses paramètres :
- vérifient les règles issues de la connaissance expérimentale,
- remplissent les conditions liées aux propriétés des attributs,
- remplissent les conditions d'association nécessaires ou non.

Les limites opérationnelles sont définies au cours d'une opération d'apprentissage, pendant laquelle on produit des images ultrasonores de soudures témoins présentant un type de défaut déterminé, on filtre lesdites images ultrasonores selon un seuil adapté audit type de défaut, ce seuil étant également déterminé par apprentissage, et on cherche dans les objets qui représentent un défaut à définir les paramètres caractéristiques et déterminants (attributs et valeurs d'attributs) de la présence d'un défaut.

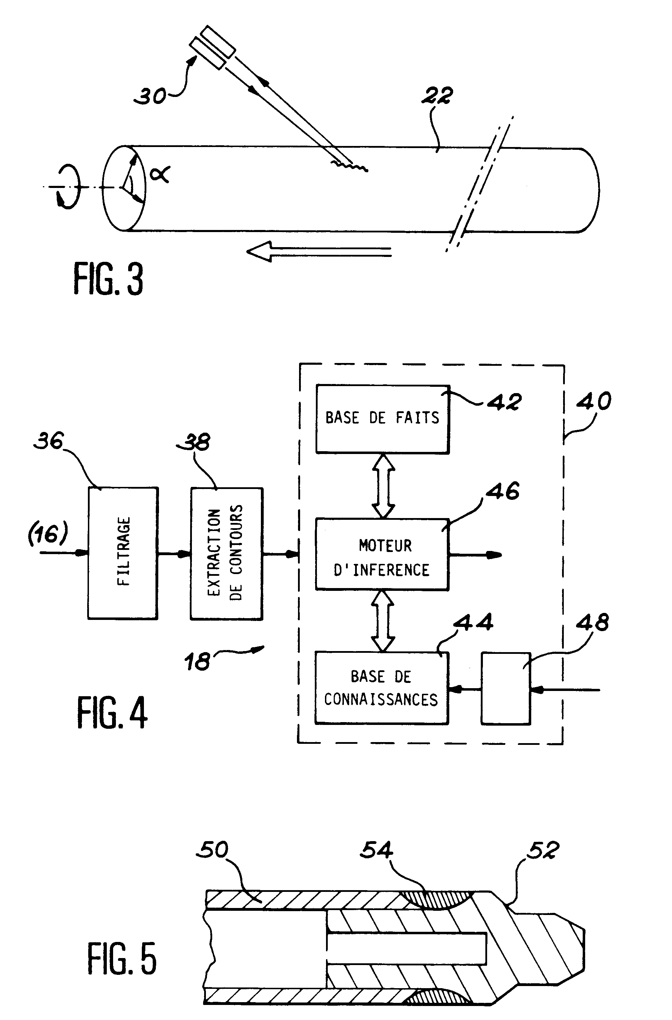

On décrira plus loin, en référence à la figure 4, un moyen de mise en oeuvre de l'opération d'analyse 8 constitué par un système expert.

La dernière opération constituant le procédé de l'invention est une opération 10 d'évaluation des défauts, comme représenté sur la figure 1. Cette évaluation, qui aboutit à l'acceptation ou au rejet de la pièce soudée, est fondée sur des critères sélectifs validés par l'expérience et des essais destructifs comparatifs et la spécification en vigueur.

Le procédé de l'invention, que l'on vient de décrire en référence à la figure 1, est un procédé automatique d'identification. Aucun opérateur humain n'intervient dans le contrôle de la soudure et l'interprétation des résultats, ce qui permet de s'affranchir des erreurs de jugement d'origine humaine causées par exemple par la fatigue.

Le procédé de l'invention est donc mis en oeuvre par un système de traitement automatique. La figure 2 illustre schématiquement un mode de réalisation de ce système.

Il comprend un banc de mesure 12, un réflectomètre 14, un moyen de commande 16 et un moyen d'analyse 18.

Le banc de mesure 12 comprend une cuve 20 dans laquelle est placée la pièce soudée 22 à analyser. La cuve 20 est emplie d'eau de façon à assurer un couplage constant de l'énergie ultrasonore entre le palpeur et la pièce à contrôler. Dans ce cas, une circulation d'eau est prévue au moyen d'une pompe 24 qui reçoit l'eau du bas de la cuve par une canalisation 26 et la déverse dans le haut de la cuve par une canalisation 28.

Le banc de mesure 12 comprend également un palpeur 30 composé d'un émetteur-récepteur d'ondes ultrasonores. Dans la représentation schématique de la figure 2, un seul palpeur est représenté ; cependant, en pratique, on utilise deux ou trois palpeurs qui émettent des ondes ultrasonores avec des angles d'incidences différents.

Le banc de mesure 12 comprend enfin des moyens de déplacement de la pièce soudée 22 par rapport au(x) palpeur(s). En général, la cuve et les palpeurs sont solidaires. La pièce à contrôler tourne tandis que la cuve et les palpeurs sont déplacés longitudinalement. L'exploration est hélicoïdale. Les moyens de déplacement dépendent de l'image ultrasonore que l'on désire obtenir et de la forme de la soudure à analyser.

A titre d'exemple, les moyens de déplacement peuvent comprendre un moyen de translation de la cuve, représenté schématiquement par une double flèche 32 sur la figure, et un moyen de rotation 34 de la pièce 22 dans le cas où la soudure forme un anneau 36 sur une pièce cylindrique.

Le réflectomètre 14 assure la génération des ondes ultrasonores en alimentant les émetteurs des palpeurs 30 et la réception des échos ultrasonores détectés.

Les ondes ultrasonores utilisées en contrôle non destructif ont une fréquence de l'ordre de 100 khz à quelques mégahertz. Dans la présente application, les ondes ultrasonores ont par exemple une fréquence comprise entre 1 et 10 Mhz.

On sait que l'emploi d'une fréquence élevée accroît la sensibilité de la mesure, mais qu'en contrepartie l'affaiblissement de l'onde est accru, ce qui diminue la profondeur maximale de pénétration qui peut être atteinte. Le choix de la fréquence résulte donc d'un compromis qui dépend de la pièce soudée analyser et du type de défaut que l'on recherche.

L'image ultrasonore est construire point par point. Dans le cas représenté sur la figure 2, l'image ultrasonore peut être bidimensionnelle, un axe de coordonnées correspondant au déplacement en translation de la cuve opéré par le moyen 32 et l'autre axe de coordonnées correspondant au déplacement angulaire de la pièce opéré par le moyen 34. L'image peut être également tridimensionnelle si en plus la mesure du retard de l'écho ultrasonore par rapport à l'onde émise est suffisamment précise pour que la profondeur où a eu lieu la réflexion puisse être déterminée.

Le principe de la mesure par ultrasons est représenté sur la figure 3. La pièce 22 est mise en rotation autour de son axe alors que la cuve se déplace en translation parallèlement à l'axe de la pièce. Pour chaque émission d'une onde ultrasonore, on relève les coordonnées angulaire et longitudinales de la pièce, ce qui détermine la position d'impact de l'onde ultrasonore. L'amplitude de l'écho ultrasonore est enregistré par le réflectomètre 14, la détection de cet écho n'étant possible que pendant un intervalle de temps prédéterminé suivant l'émission de l'onde ultrasonore, afin d'éviter de détecter des échos parasites.

La mesure est répétée pour un grand nombre de points et le résultat est présenté sous la forme d'une image sur un écran.

Le réflectomètre 14 construisant l'image ultrasonore peut être par exemple un appareil de type reflectoscope S80 de Automatisation Internationale.

L'image ultrasonore est délivrée, éventuellement sous forme numérique, au moyen de commande 16. Celui-ci commande la mise en action des moyens de déplacement 32, 34 et du réflectomètre 14.

Ce moyen de commande est de préférence un ordinateur comprenant des moyens pour mémoriser l'image ultrasonore, des moyens d'affichage et d'impression de cette image ultrasonore et des moyens pour dialoguer avec un opérateur humain pour qu'il puisse définir la mesure à effectuer en précisant l'amplitude et la vitesse des déplacements de la pièce soudée à analyser, le nombre de palpeurs utilisés, l'angle d'incidence des ondes ultrasonores émises par les palpeurs, la fenêtre temporelle pendant laquelle le réflectomètre est actif pour détecter un écho ultrasonore et de manière générale pour fixer la valeur de tout paramètre intervenant dans la mesure.

Le moyen de commande peut être réalisé par exemple d'un microordinateur INTEL/86310 de la société INTEL, et des équipements périphériques associés.

Le système représenté sur la figure 2 comporte un banc de mesure 12, un réflectomètre 14 et un moyen de commande 16 qui sont combinés de manière classique, pour produire une image ultrasonore d'une soudure.

Ce système comprend en outre un moyen d'analyse 18 qui permet une identification automatique d'un défaut à partir de l'image ultrasonore. Ce moyen d'analyse met en oeuvre les opérations essentielles du procédé de l'invention.

Un mode de réalisation particulier de ce moyen d'analyse est représenté sur la figure 4. Il comprend trois éléments : un moyen de filtrage 36, un moyen de traitement 38 et un moyen de reconnaissance 40.

Le moyen de filtrage 36 reçoit l'image ultrasonore du moyen de commande 16. Conformément à l'invention, il effectue un seuillage sur cette image, le seuil étant défini en fonction du type de défaut recherché. Le niveau du seuil peut être déterminé au cours d'une phase d'apprentissage précédente, de manière expérimentale, en analysant des soudures témoins présentant le type de défaut recherché.

Le seuillage a pour effet de remplacer par une amplitude nulle les amplitudes des points de l'image qui sont inférieures au seuil. L'image filtrée comporte alors des zones où les points ont une amplitude supérieure au seuil dans un fond constitué par des points d'amplitude nulle.

Les composantes de l'image appelées objets, sont à la base de la reconnaissance des défauts dans le procédé de l'invention.

Ces objets sont localisés par le moyen de traitement 38 qui effectue un traitement d'image classique de type extraction de contour. Ce traitement permet de délimiter géométriquement les objets.

Le traitement est complété par une identification des objets, c'est-à-dire par la détermination, pour chaque objet, des valeurs d'attributs d'une liste prédéterminée d'attributs. Comme on l'a indiqué plus haut, cette liste d'attributs peut comprendre des attributs de nature géométriquue, tel que la position de l'objet dans l'image ou la taille de l'objet, et des attributs de nature physique, tel que la masse ou la densité de l'objet.

Les objets identifiés sont ensuite transmis au moyen de reconnaissance 40 dont ils constituent les données de base pour l'identification des défauts de soudure. Cette identification est effectuée suivant les principes exposés précédemment dans la description du procédé (description de l'opération d'analyse 8).

Le moyen de reconnaissance 40 représenté sur la figure 4 met en oeuvre cette méthode de reconnaissance. Il se présente sous la forme d'un système expert, c'est-à-dire un système automatique de reconnaissance modélisant le comportement d'un expert humain.

Le moyen de reconnaissance 40 comprend :
- une première mémoire 42 pour recevoir la liste des objets de l'image filtrée, cette mémoire constituant la base de faits du système expert,
- une seconde mémoire 44 pour mémoriser la connaissance d'une expert humain sous la forme d'un ensemble de règles, cette mémoire constituant la base de connaissance du système expert,
- un moyen de traitement 46 pour interpréter les objets de la base de faits en fonction des règles de la base de connaissance, ce moyen de traitement constituant le moteur d'inférence du système expert,
- un moyen de mise à jour 48 pour modifier la base de connaissance en fonction du type de défaut recherché.

Le procédé d'identification mis en oeuvre par le moyen de reconnaissance dépend de la soudure à analyser et des types de défauts recherché. Le fonctionnement du moyen de reconnaissance va dont être explicité sur un exemple particulier.

On sait que dans les réacteurs nucléaires, des dizaines de milliers de crayons combustibles sont implantés dans le coeur. Ces crayons sont constitués d'un tube de gaine renfermant la matière combustible (oxyde d'uranium) et sont fermés à leurs extrémités par deux bouchons soudés qui assurent l'étanchéité.

Une vue en coupe d'une extrémité d'un crayon combustible est représenté sur la figure 5. La gaine 50 a une épaiseur de l'ordre de 0,6 mm et un diamètre de l'ordre de 10 mm. Un bouchon 52 est fixé à l'extrémité de la gaine par une soudure annulaire 54.

Une image ultrasonore de la soudure est produite au moyen du système décrit en référence à la figure 2. Compte-tenu de la faible épaisseur de la soudure, il n'est pas nécessaire ici d'établir une image ultrasonore tridimensionnelle. Une image plane suffit ; ses axes de coordonnées comprennent une coordonnée longitudinale (abscisse x selon l'axe de la gaine) et une coordonnée angulaire (angle α entre 0 et 359°). Ces coordonnées sont délivrées par des codeurs de position associés aux moyens de déplacement 32, 34 du système de la figure 2. L'image ultrasonore comprend par exemple 256 points par tour (coordonnée angulaire) au pas de 0,2 mm selon l'axe du tube de gaine.

Trois types de défauts sont recherchés dans l'image ultrasonore : une porosité, un manque de pénétration et un affaissement de gaine.

Une étude préliminaire faite sur des soudures témoins présentant chacun de ces trois types de défauts a permis de dégager les caractéristiques des images ultrasonores associées à chaque type de défaut.

Il a été constaté que :
- une porosité se présente sous la forme d'un objet de petit taille et en général de forte densité,
- un manque de pénétration peut s'étendre sur la totalité de la soudure. Il est caractérisé par la présence de nombreux objets séparés mais voisins,
- un affaissement de gaine se présente sous la forme d'un objet très fragmenté, de grande surface et de densité élevée.

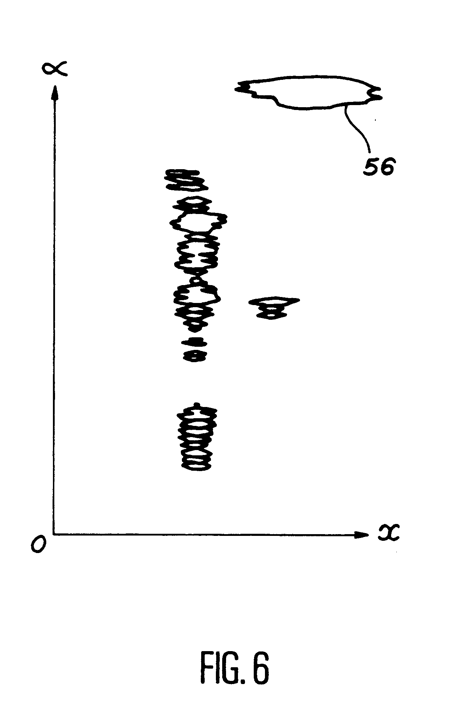

Les représentations graphiques des figures 6, 7, 8 mettent en évidence respectivement une porosité, un manque de pénétration et un affaissement de gaine. Le tracé, en trait fort, correspond au seuil appliqué à l'image (ce seuil est différent pour les trois représentations, car les défauts recherchés sont de types différents).

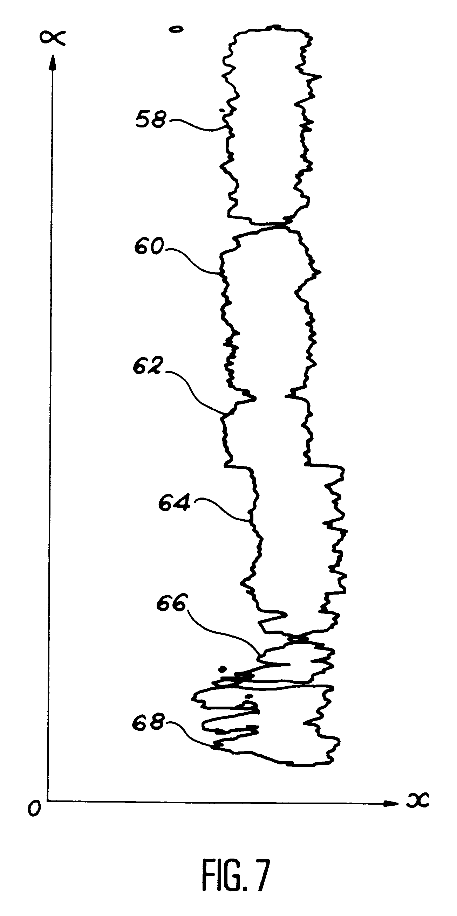

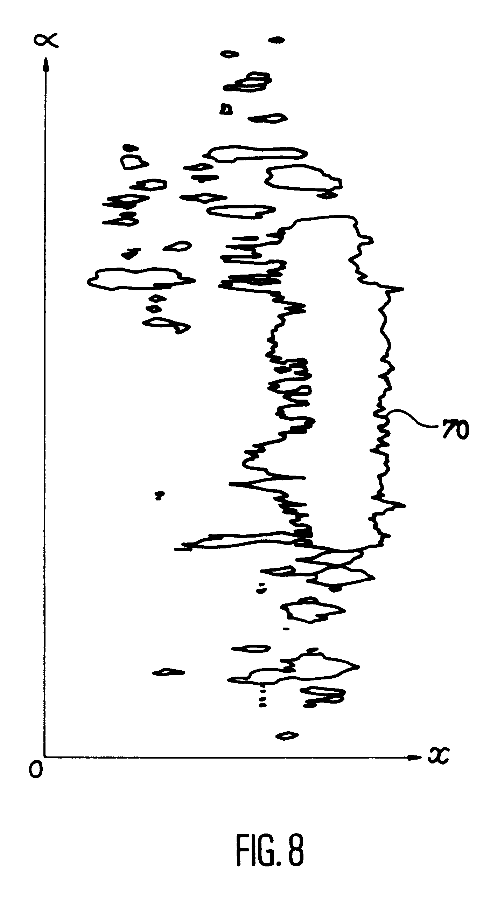

Dans la figure 6, la référence numérique 56 désigne un objet caractéristique de la présence d'une porosité. De même, les objets 58-68 de la figure 7 sont représentatifs, par leur nombre et leur proximité, d'un manque de pénétration de la soudure. Enfin, l'objet 70 de la figure 8 est un objet de grande dimension qui indique un affaissement de gaine.

Pour la reconnaissance des défauts dans la soudure du crayon de combustible de la figure 5, les objets détectés dans l'image ultrasonore sont caractérisés par les attributs suivants :
- dimension de l'objet : extension longitudinale et extension angulaire (éventuellement épaisseur si l'image est tridimensionnelle),
- localisation de l'objet : abscisse longitudinale initiale et abscisse longitudinale finale (éventuellement profondeur dans la même hypothèse),
- périmètre, surface (et éventuellement volume) de l'objet, exprimés en nombre de points d'image,
- masse et densité de l'objet, c'est-à-dire respectivement, somme des amplitudes des points d'image constituant l'objet et rapport de ladite masse à sa surface,
- amplitude maximale,
- position du centre de gravité de l'objet.

La liste des objets et les valeurs d'attributs sont mémorisées dans la mémoire 42.

Dans la mémoire 44, sont stockées les connaissances permettant au moyen de reconnaissance 40 d'identifier les défauts. Les connaissances sont exprimées sous forme de règles et comprennent des règles établies d'après la connaissance et des règles établies à partir des propriétés des attributs.

Les règles établies d'après la connaissance ont pour but de déterminer :
- le palpeur à utiliser dans le cas d'un système comportant des palpeurs différents (fréquence de l'onde ultrasonore, angle d'incidence de l'onde par rapport à la pièce soudée, ...). Dans l'application décrite, on utilise un palpeur P0 pour la détection des porosités et des manques de pénétration, et deux palpeurs P1 et P2 pour la détection des affaissements internes de la gaine,
- le seuil de filtrage de l'image ultrasonore. Ce paramètre fait évoluer le nombre et la forme des objets contenus dans l'image. Il est déterminant pour l'analyse suivant le type de défaut recherché,

Les règles établies à partir des propriétés des attributs sont relatives :
- au périmètre et à la surface des objets. Des valeurs minimales sont indiquées, ce qui permet d'éliminer les petits objets non significatifs,
- à l'abscisse du centre de gravité. Des valeurs minimales et maximales sont indiquées pour chaque type de défaut,
- à la densité. Un critère de densité minimale et un critère de fluctuation maximale de densité sont utilisés pour déterminer si deux objets sont de même nature,
- à l'interconnexion des objets. Cette règle est élaborée pour la reconnaissance d'un manque de pénétration. Elle permet au moyen de reconnaissance de constater que des objets sont proches, ce qui caractérise un manque de pénétration si ces objets sont de même nature.

Pour la reconnaissance de chaque type de défaut, les règles sont appliquées dans un ordre déterminé par le moteur d'inférence. La recherche des défauts est faite dans l'ordre suivant : porosité, manque de pénétration, puis affaissement de gaine.

Pour la recherche de porosité, on vérifie successivement les règles générales suivantes :
- abscisse du centre de gravité supérieure à une valeur minimale MIN1,
- abscisse du centre de gravité inférieure à une valeur maximale MAX1,
- abscisse initiale supérieure à une valeur minimale MIN2,
- abscisse initiale inférieure à une valeur maximale MAX2,
- extension longitudinale supérieure à une valeur minimale MIN3,
- extension longitudinale inférieure à une valeur maximale MAX3.

Si chacune de ces règles est vérifiée pour un objet, on vérifie des règles particulières pour spécifier la catégorie du défaut. Des catégories de porosité correspondant à des porosités de tailles différentes peuvent ainsi être définies. Un ensemble de règles spécifiques, fixant des valeurs particulières d'attributs pour chaque catégorie de défauts, est ainsi construit. Cet ensemble comprend les règles suivantes :
- seuil de valeur S1,
- densité supérieure à une valeur minimale D1,
- extension angulaire supérieure à une valeur minimale EMIN1,
- extension angulaire inférieure à une valeur maximale EMAX1,
- amplitude maximale supérieure à une valeur minimale A1.

L'ensemble des valeurs S1, D1, EMIN1, EMAX1, A1 définit une catégorie de porosités. De la même manière, des valeurs S2, D2, EMIN2, EMAX2, A2 définissent une autre catégorie de porosités.

L'identification des porosités est suivie par l'identification du manque de pénétration. Pour celà, on reprend l'image ultrasonore initiale, et on la seuille suivant une valeur de seuil spécifique.

On vérifie ensuite si les règles générales, citées plus haut, sont satisfaites (les valeurs des attributs sont différentes pour la recherche de porosités et la recherche de manque de pénétration). Si c'est le cas, l'objet est appelé candidat et la soudure peut présenter un défaut de manque de pénétration. L'identification est faite en vérifiant si les règles spécifiques suivantes sont satisfaites :
- surface supérieure à une valeur minimale S,
- densité supérieure à une valeur minimale D,
- distance entre objet candidats inférieure à une valeur minimale d,
- fluctuation de densité supérieure une valeur minimale FD,
- extension angulaire totale des objets contigus supérieure à une valeur minimale EAT.

On procède ensuite à la recherche des défauts d'affaissement de gaine en seuillant l'image ultrasonore initiale avec une valeur de seuil spécifique.

Dans une première étape, on vérifie que les règles générales sont satisfaites. Dans ces règles générales, les valeurs des attributs sont spécifiques du type de défaut recherché.

Si le résultat est positif, on vérifie ensuite si les règles spécifiques suivantes sont vérifiées :
- densité supérieure à une valeur minimale DA,
- extension angulaire inférieure à une valeur minimale EMINA,
- extension angulaire supérieure à une valeur maximale EMAXA,
- amplitude supérieure à une valeur minimale AA,

Le processus de raisonnement mis en oeuvre par le moyen de reconnaissance conduit à une qualité d'analyse qui s'avère parfois supérieure et plus rigoureuse que celle d'un expert humain.

Le système d'identification décrit permet d'identifier les trois types de défauts indiqués en 30 secondes environ.

Ce système présente les avantages suivants :
- analyse immédiate des résultats,
- décision immédiate d'acceptation ou de rejet,
- paramètres de sélection ajustables,
- cadence d'examen élevée 2000 soudures/jour
- élimination des erreurs d'interprétation humaine,
- suivi dynamique de la fabrication et de ses tendances.

## Revendications

1. Procédé automatique d'identification de défauts par ultrasons pour identifier un défaut de type déterminé dans une pièce, ledit procédé comprenant une première étape pour produire une image ultrasonore de ladite pièce dans laquelle :
- on balaie ladite pièce par au moins un faisceau d'ondes ultrasonores,
- on enregistre point par point l'amplitude des signaux ultrasonores réfléchis ou diffractés,
- on construit une image ultrasonore dont l'amplitude du signal en chaque point est proportionnelle audit enregistrement,
ledit procédé étant caractérisé en ce qu'il comprend une seconde étape visant à reconnaître la présence dudit défaut en analysant ladite image ultrasonore, dans laquelle :
- on filtre ladite image ultrasonore pour éliminer les signaux dont l'amplitude est inférieure à un seuil déterminé au cours d'une phase d'apprentissage sur des pièces présentant ledit défaut, ledit seuil étant fonction du type dudit défaut, ce filtrage produisant des zones disjointes correspondant aux réflecteurs ultrasonores,
- on crée des objets en extrayant les contours desdites zones disjointes,
- on établit une liste des objets de ladite image filtrée, chaque objet étant ainsi défini géométriquement par son contour,
- pour chaque objet, on calcule les valeurs des attributs d'une liste prédéterminée d'attributs, spécifiques du type de défault recherché, caractérisant un objet,
- pour chaque objet, on compare les valeurs desdits attributs à des valeurs minimale et/ou maximale, fonction du type dudit défaut, déterminées au cours de ladite phase d'apprentissage, sur des pièces témoins dans lesquelles lesdits défauts sont présents et identifiés par un spécialiste,
- on identifie les défauts de soudure en fonction du résultat de cette comparaison.

2. Procédé automatique d'identification de défauts selon la revendication 1, pour identifier des défauts d'un ensemble de défauts de types différents prédéterminés, ledit procédé étant caractérisé en ce qu'il comprend une pluralité de secondes étapes successives, chaque seconde étape étant associée à un type de défaut particulier, le seuil de filtrage et les valeurs minimale et/ou maximale des attributs étant fonction, pour chaque étape, du type dudit défaut.

3. Procédé selon l'une quelconque des revendications 1 et 2, caractérisé en ce que la liste d'attributs comprend au moins un attribut de nature géométrique, parmi les attributs suivants :
- position de l'objet suivant au moins un axe de coordonnées de l'image ultrasonore filtrée,
- dimension de l'objet suivant au moins un axe de coordonnées de l'image ultrasonore filtrée,
- rapport des dimensions de l'objet suivant deux axes de coordonnées de l'image ultrasonore filtrée.

4. Procédé selon l'une quelconque des revendications 1 à 3, caractérisé en ce que la liste d'attributs comprend au moins un attribut de nature physique, parmi les attributs suivants :
- masse de l'objet, égale à la somme des amplitudes des points d'image de l'objet,
- densité de l'objet, égale au rapport de sa masse à sa surface,
- amplitude maximale, égale à la plus grande des amplitudes des signaux en chaque point d'image de l'objet,
- position du centre de gravité correspondant de l'objet.

5. Procédé selon l'une quelconque des revendications 1 à 4, pour l'identification d'un manque de pénétration de la soudure, caractérisé en ce qu'on utilise en outre un critère de proximité des objets.

6. Procédé selon l'une quelconque des revendications 2 à 5, pour identifier au moins la porosité et le manque de pénétration d'une soudure, caractérisé en ce qu'on recherche d'abord la porosité et ensuite le manque de pénétration.

7. Procédé selon l'une quelconque des revendications 1 à 6, pour identifier un affaissement de l'une des parties soudées, caractérisé en ce qu'on procède aux recherches de défaut dans l'ordre suivant : porosité, manque de pénétration, affaissement.

8. Système automatique d'identification d'un défaut par ultrasons pour la mise en oeuvre du procédé selon l'une quelconque des revendications 1 à 7, pour identifier un défaut de type déterminé dans une pièce (22), ledit système comprenant :
- un banc de mesure (12) comportant au moins un palpeur (30), chaque palpeur étant composé d'un émetteur d'onde ultrasonore et d'un récepteur d'onde ultrasonore, et un moyen de déplacement (32, 34) pour déplacer les palpeurs relativement à ladite pièce,
- un réflectomètre (14) pour engendrer les signaux d'ondes ultrasonores, recevoir les échos détectés et construire une image ultrasonore correspondante,
- un moyen de commande (16) pour commander ledit banc de mesure et ledit réflectomètre, ledit système étant caractérisé en ce qu'il comprend en outre un moyen d'analyse (18) constitué des éléments suivants :
- un moyen de filtrage (36) recevant l'image ultrasonore et appliquant un seuil à ladite image, ledit seuil étant fonction du type de défaut recherché,
- un moyen de traitement (38) pour réaliser une extraction de contour dans ladite image filtrée, ce traitement mettant en évidence les objets constitués par les zones de l'image dont l'amplitude est supérieure audit seuil ; et
- un moyen de reconnaissance (40) pour identifier les défauts dudit type de défaut en fonction desdits objets
comprenant des moyens de mémorisation (42, 44) et de traitement (46) pour reconnaître les défauts dudit type de défaut en identifiant les propriétés des objets détectés et mémorisés dans lesdits moyens de mémorisation avec les propriétés des objets associés audit type de défaut qui sont aussi contenues dans lesdits moyens de mémorisation.

9. Système selon la revendication 8, caractérisé en ce que le moyen de reconnaissance (40) comprend :
- une mémoire (42) pour mémoriser la liste des objets délivrée par le moyen de traitement,
- une mémoire (44) pour mémoriser les propriétés des objets associées audit type de défaut,

## Claims

1. Automatic process for the identification of defects by ultrasound to identify a defect of a determined type in a part, the said process comprising a first step for producing an ultrasound image of the said part, in which:
- the part is swept by at least one beam of ultrasound waves,
- the amplitude of the reflected or diffracted ultrasound waves is recorded point by point,
- an ultrasound image is constructed, for which the amplitude of the signal at each point is proportional to the said recorded value,
the said process being characterized in that it comprises a second step with a view to recognizing the presence of the said defect by analyzing the said ultrasound image, whereby:
- the said ultrasound image is filtered to eliminate signals whose amplitude is less than a determined threshold during a learning phase on parts having said defect, the said threshold being a function of the type of the said defect, with this filtering producing disjoint zones corresponding to ultrasound reflectors,
- objects are created by extracting the contours of the said disjoint zones,
- a list of objects of the said filtered image is established, with each object being defined geometrically by its contour,
- for each object, the values are calculated for attributes of a predetermined list of attributes specific to the sought defect type characterizing an object,
- for each object, the values of the said attributes are compared to minimum and/or maximum values, a function of the said defect type determined in the course of said learning phase on sample parts in which the said defects are present and identified by a specialist,
- the weld defects are identified as a function of the rest of this comparison.

2. Automatic process of identification of defects according to claim 1, to identify the defects of a set of defects of different predetermined types, with the said process being characterized in that it comprises a number of successive second stages, with each second stage being associated with a particular defect type, with the filtering threshold and the minimum and/or maximum values of attributes being a function, for each stage, of the type of the defect.

3. Process according to either of the claims 1 and 2, characterized in that the list of attributes includes at least one attribute of a geometric nature, from among the following attributes:
- position of the object along at least one coordinate axis of the filtered ultrasound image,
- dimension of the object along at least one coordinate axis of the filtered ultrasound image,
- ratio of the dimensions of the object along two coordinate axes of the filtered ultrasound image.

4. Process according to any one of the claims 1 to 3, characterized in that the list of attributes includes at least one attribute of a physical nature, from among the following attributes:
- mass of the object, equal to the sum of the amplitudes of the image points of the object,
- density of the object, equal to the ratio of its mass to its area,
- maximum amplitude, equal to the greatest of the amplitudes of the signals at each image point of the object,
- position of the corresponding centre of gravity of the object.

5. Process according to any one of the claims 1 to 4 for the identification of a lack of penetration of the weld, characterized in that a criterion of proximity of objects is also used.

6. process according to any one of the claims 2 to 5 to identify at least porosity and lack of penetration of a weld, characterized in that first porosity is sought, and then lack of penetration.

7. Process according to any one of the claims 1 to 6 to identify a collapse of one of the welded parts, characterized in that searches for defects are pursued in the following order: porosity, lack of penetration, collapse.

8. Automatic system of identification of a defect by ultrasound for implementation of the process according to any one of the claims 1 to 7 to identify a defect of a determined type in a part (22), with the said system comprising:
- a measurement bench (12) comprising at least one probe (30), with each probe being composed of an emitter of an ultrasound wave and a receptor of an ultrasound wave, and a means of displacement (32, 34) to move the probes with respect to the said part,
- a reflectometer (14) to generate ultrasound wave signals, receive the detected echos, and construct a corresponding ultrasound image,
- a control apparatus (16) to control the said measurement bench and the said reflectometer,
- a filtering apparatus (36) receiving the ultrasound image and applying a threshold to the said image, with the said threshold being a function of the type of defect sought,
- a processing apparatus (38) to carry out an extraction of contour within the said filtered image, with this processing revealing objects constituted by image zones whose amplitude is greater than the said threshold, and
- a recognition apparatus (40) to identify the defects of the said defect type as a function of the said objects comprising storage means (42, 44) and processing means (46) for recognizing defects of said defect type by identifying the properties of objects detected and stored in said storage means with the properties of objects associated with said defect type also contained in said storage means.

9. System according to claim 8, characterized in that the recognition apparatus (40) comprises:
- a memory (42) to store the list of objects delivered by the processing apparatus and
- a memory (44) to store the properties of objects associated with the said type of defect.

## Patentansprüche

1. Verfahren zur automatischen Fehleridentifizierung mittels Ultraschall um einen betimmten Fehler in einem Werkstück zu identifizieren, welches einen ersten Abschnitt beinhaltet, um ein Ultraschallbild des besagten Werkstücks zu erstellen, in welchem man:
- besagtes Werkstück durch mindestens ein Bündel an Ultraschallwellen abtastet,
- Punkt für Punkt die Amplitude der reflektierten oder gebeugten Ultraschallsignale aufzeichnet,
- ein Ultraschallbild erstellt, in welchem die Amplitude des Signal in jedem Punkt proportional zur obigen Aufzeichnung ist,
dadurch **gekennzeichnet,**
daß es einen zweiten Abschnitt umfaßt, welcher die Absicht hat, das Vorhandensein des genannten Fehlers durch Analyse des besagten Ultraschallbilds zu erkennen, indem man:
- besagtes Ultraschallbild filtert, um die Signale zu eliminieren, deren Amplitude kleiner ist als ein während einer Einarbeitungsphase mit einem Werkstück, das besagten Fehler aufweist, bestimmter Schwellenwert, welcher eine Funktion von der Art des besagten Fehlers ist, und durch die Filterung abgetrennte Zonen hergestellt werden, welche den Ultraschallreflektoren entsprechen,
- durch Herausziehen der Konturen der besagten abgetrennten Zonen Objekte schafft,
- eine Liste der Objekte des besagten gefilterten Bildes aufscellt, wobei also jedes Objekt geometrisch durch seine Kontur definiert wird,
- für jedes Objekt die Werte der die Objekte kennzeichnenden Merkmale aus einer vorher bestimmten Liste von den für die Art des gesuchten Fehlers spezifischen Merkmale berechnet,
- für jedes Objekt die Werte der besagten Merkmale mit den von der Art des besagten Fehlers abhängigen Minimal-und/oder Maximalwerten vergleicht, welche während der besagten Einarbeitungsphase mit den standardisierten Werkstücken bestimmt werden, auf welchen die besagten Fehler auftreten und durch einen Spezialisten identifiziert werden,
- die Lötfehler in Abhängigkeit vom Ergebnis dieses Vergleichs identifiziert.

2. Verfahren zur automatischen Fehleridentifizierung gemäß dem Anspruch 1 zur Identifizierung der Fehler aus einer Menge an Fehlern verschiedener vorher festgesetzter Arten ist dadurch **gekennzeichnet,** daß es eine Vielzahl zweiter aufeinander abfolgender Abschnitte umfaßt, wobei jeder zweite Abschnitt mit einem bestimmten Fehlertyp verbunden ist, der Schwellenwert der Filterung und die Minimal- und/oder Maximalwerte der Merkmale für jeden Abschnitt von der Art des besagten Fehlers abhängen.

3. Verfahren gemäß irgendeinem der Ansprüche 1 und 2 ist dadurch **gekennzeichnet,** daß die Liste der Merkmale mindestens ein Merkmal geometrischer Art aus den folgenden Merkmalen umfaßt:
- Position des Objekts in mindestens einer Koordinatenachse des gefilterten Ultraschallbildes ausgerichtet,
- Dimension des Objekts in mindestens einer Koordinatenachse des gefilterten Ultraschallbildes ausgerichtet,
- Verhältnis der Dimensionen des Objekts in mindestens einer Koordinatenachse des gefilterten Ultraschallbildes ausgerichtet.

4. Verfahren gemäß irgendeinem der Ansprüche 1 bis 3 dadurch **gekennzeichnet,** daß die Liste der Merkmale mindestens ein Merkmal physikalischer Art aus den folgenden Merkmalen umfaßt:
- Masse des Objekts gleich der Summe der Amplituden der Bilddpunkte des Objekts,
- Dichte des Objekts gleich dem Verhältnis aus seiner Masse und seiner Oberfläche,
- Maximale Amplitude gleich der größten Signalamplitude in jedem Bildpunkt des Objekts,
- Position des Gravitationsmittelpunkts, der dem Objekt entspricht.

5. Verfahren gemäß irgendeinem der Ansprüche 1 bis 4 zur Identifizierung einer unvollständigen Durchdringung der Lötstelle, dadurch **gekennzeichnet,** daß zusätzlich ein Kriterium der Nähe des Objekts verwendet wird.

6. Verfahren gemäß irgendeinem der Ansprüche 2 bis 5 zur Identifizierung zumindest von der Leitfähigkeit und der unvollständigen Durchdringung einer Lötstelle, dadurch **gekennzeichnet,** daß zuerst die Leitfähigkeit und anschließend die unvollständige Durchdringung untersucht werden.

7. Verfahren gemäß irgendeinem der Ansprüche 1 bis 6 zur Identifizierung einer Ermüdung einer der gelöteten Bereiche, dadurch **gekennzeichnet,** daß man bei den Fehlersuchen in folgender Reihenfolge vorgeht: Leitfähigkeit, unvollständige Durchdringung, Ermüdung.

8. Automatische Einrichtung zur Identifizierung eines Fehlers mittels Ultraschall zur Anwendung des Verfahrens gemäß irgendeinem der Ansprüche 1 bis 7 zur Identifizierung einer bestimmten Fehlerart in einem Werkstück (22) besteht aus:
- einer Meßbank (12), welche mindestens einen Taster (30) zulässt, von denen jeder aus einem Ultraschallwellensender und einem Ultraschallwellenempfänger zusammengesetzt ist, und eine Verschiebungsvorrichtung (32, 34), um die Taster relativ zu dem besagten Werkstück zu bewegen,
- einem Reflektometer (14), um Ultraschallwellensignale zu erzeugen, die detektierten Echos zu erhalten und ein entsprechendes Ultraschallbild zu erzeugen,
- einem Steuergerät (16), um besagte Meßbank und besagtes Reflektometer zu steuern,
dadurch **gekennzeichnet,** daß es zusätzlich ein Analysengerät (18) umfaßt, das aus den folgenden Elementen besteht:
- einem Filtergerät (36), welches das Ultraschallbild empfängt und einen Schwellenwert für das besagte Bild anwendet, welcher von der Art des gesuchten Fehlers abhängt,
- einem Aufnahmegerät (38) zur Durchführung des Herausziehens der Kontur aus dem besagten gefilterten Bild, welches die Objekte hervorhebt, die aus den Zonen des Bildes zusammengesetzt sind, deren Amplitude größer ist als besagter Schwellenwert; und
- einem Detektorgerät (40) zur Identifizierung der Fehler des besagten Fehlertyps in Abhängigkeit von den besagten Objekten, welches eine Speichereinheit (42, 44) und ein Aufnahmegerät (46) zur Detektion der Fehler des besagten Fehlertyps durch Unterscheidung der Eigenheiten des detektierten und gespeicherten Objekts in dem besagten Speichergerät mittels den Eigenheiten des mit besagtem Fehlertyp behafteten Objekt, welche auch in dem besagten Speichergerät enthalten sind, zulässt.

9. Einrichtung gemäß dem Anspruch 8, dadurch **gekennzeichnet,** daß das Detektorgerät (40) :
- einen Speicher (42) zur Speicherung der Liste der von dem Aufnahmegerät übergebenen Objekte,
- einen Speicher (44) zur Speicherung der Eigenheiten der mit dem besagten Fehlertyp behafteten Objekte umfaßt.
